# EUROPÄISCHE PATENTSCHRIFT

(11) **EP 2 440 425 B1**
(45) Veröffentlichungstag und Bekanntmachung des Hinweises auf die Patenterteilung: **01.08.2018**
(21) Anmeldenummer: 10723093.0
(22) Anmeldetag: 28.05.2010
(51) Int. Cl.: B60K 35/00, G06F 3/048

(54) **VERFAHREN ZUM STEUERN EINER GRAFISCHEN BENUTZERSCHNITTSTELLE UND BEDIENVORRICHTUNG FÜR EINE GRAFISCHE BENUTZERSCHNITTSTELLE**
METHOD FOR CONTROLLING A GRAPHICAL USER INTERFACE AND OPERATING DEVICE FOR A GRAPHICAL USER INTERFACE
PROCÉDÉ POUR COMMANDER UNE INTERFACE UTILISATEUR GRAPHIQUE ET UN DISPOSITIF DE COMMANDE POUR UNE INTERFACE UTILISATEUR GRAPHIQUE

(30) Priorität: 12.06.2009 DE 102009024656
(43) Veröffentlichungstag der Anmeldung: 18.04.2012
(73) Patentinhaber: Volkswagen Aktiengesellschaft, 38440 Wolfsburg (DE)
(72) Erfinder: BENDEWALD, Lennart, 38442 Wolfsburg (DE); HENZE, Stefan, 38104 Braunschweig (DE); WÄLLER, Christoph, 38106 Braunschweig (DE); WAGNER, Volkmar, 10965 Berlin (DE); HAUSCHILD, Frank, 10587 Berlin (DE)
(74) Vertreter: Reitstötter Kinzebach
(86) Internationale Anmeldenummer: PCT/EP2010/057457
(87) Internationale Veröffentlichungsnummer: WO 2010/142543

(56) Entgegenhaltungen:
- WO-A2-02/08881
- US-A1- 2006 197 753
- US-A1- 2008 058 007
- US-A1- 2008 143 684

## Beschreibung

Die vorliegende Erfindung betrifft ein Verfahren zum Steuern einer grafischen Benutzerschnittstelle. Ferner betrifft die Erfindung eine Bedienvorrichtung für eine grafische Benutzerschnittstelle mit einer Anzeigevorrichtung, die eine Anzeigefläche aufweist, und einer Steuervorrichtung, mit welcher die auf der Anzeigefläche wiedergegebenen Anzeigeinhalte steuerbar sind, wobei mittels der Steuervorrichtung Anzeigeinhalte zu einem Menü erzeugbar sind. Ferner umfasst die Bedienvorrichtung eine Eingabevorrichtung, die eine berührungsempfindliche Oberfläche umfasst. Das Verfahren bzw. die Bedienvorrichtung werden insbesondere in einem Fahrzeug eingesetzt.

Ursprünglich wurden die verschiedenen in einem Fahrzeug, insbesondere einem Kraftfahrzeug, vorgesehenen Einrichtungen über separate Bedienelemente bedient. Beispielsweise gab es Drehschalter zum Einstellen der Lüftung sowie der Temperatur, Schalter zum Einstellen der verschiedenen Lüftungsdüsen, Schalter zum Bedienen der Beleuchtungseinrichtungen für den Innenraum des Fahrzeugs und Bedienelemente für ein Radio oder einen CD-Spieler. Bei modernen Kraftfahrzeugen sind mittlerweile so viele Einrichtungen zum Einstellen verschiedener Fahrzeugfunktionen, Informationssysteme, Fahrerassistenzsysteme und Unterhaltungssystem vorgesehen, dass es nicht mehr zweckmäßig ist, für alle Fahrzeugeinrichtungen separate Bedienelemente vorzusehen. Aus diesem Grund erfolgt die Bedienung der vielfältigen Fahrzeugeinrichtungen über ein einheitliches Bedienkonzept mit wenigen Bedienelementen, die in Verbindung mit einer graphischen Benutzerschnittstelle bedient werden. Dabei werden von der Anzeigevorrichtung Schaltflächen angezeigt, welche von dem Bedienelement ausgewählt werden können. Die Anzeigevorrichtung kann zur Anzeige ein Display umfassen, wobei unter einem Display allgemein eine Vorrichtung zum optischen Signalisieren von veränderlichen Informationen verstanden wird. Als Display werden üblicherweise Flüssigkristallanzeigen in verschiedenen Ausführungen verwendet.

Die Anzeige der Anzeigevorrichtung kann dem Fahrer verkehrs- oder betriebsbezogene Daten des Fahrzeugs visuell darstellen. Ferner kann sie den Fahrer bei der Navigation oder der Kommunikation mit der Außenwelt unterstützen. In der Nähe des primären Sichtfelds des Fahrers ist hierfür das sog. Kombiinstrument angeordnet. Üblicherweise befindet es sich im Cockpit hinter dem Lenkrad, wobei es durch eine Öffnung des Lenkrads sichtbar ist. Es dient insbesondere der Anzeige der Geschwindigkeit, des Tankinhalts, der Kühlertemperatur und anderer betriebsbezogener Informationen des Kraftfahrzeugs. Ferner können Radio- und andere Audiofunktionen dargestellt werden. Schließlich können Menüs für Telefon, Navigation, Telematikdienste und Multimediaanwendungen angezeigt werden. Die Anzeige unterstützt ferner die Bedienung verschiedener weiterer Einrichtungen des Fahrzeugs.

Zusätzlich zu dem Kombiinstrument wird vielfach eine Anzeigevorrichtung oberhalb der Mittelkonsole des Fahrzeugs angeordnet, über welche weitere Informationen angezeigt werden können. Diese Anzeigevorrichtung wird insbesondere als Multifunktionsanzeige und zur Darstellung einer geographischen Karte eines Navigationssystems verwendet. Eine solche Multifunktionsanzeige ist beispielsweise in der DE 199 41 956 A1 beschrieben.

Die Multifunktionsanzeigen werden in Verbindung mit einem Bediensystem betrieben, welches verschiedene Bedienelemente umfassen kann. In der DE 199 41 956 A1 sind z. B. mehrere Auswahl- und Funktionstasten zur Ansteuerung der Fahrzeugeinrichtungen vorgesehen. In der DE 199 41 960 A1 ist andererseits ein Multifunktionsbedienelement zur Auswahl von Funktionsgruppen und individuellen Funktionen beschrieben, das einen bidirektional drehbaren Zylinder umfasst, der ferner senkrecht zur Rotationsachse bewegbar ist.

In der EP 1 026 041 A2 ist eine Multifunktions-Bedieneinheit für ein Kraftfahrzeug beschrieben. Die Bedieneinheit umfasst ein Display sowie eine Funktionsleiste mit Funktionstasten, die eine feste Belegung, wie beispielsweise Radio, Bordcomputer, Telefon, Navigationseinheit, haben. Werden die Funktionstasten betätigt, so wird das Display dem entsprechenden Gerät zugewiesen und das Gerät bringt seinen derzeitigen Betriebsstatus auf dem Display zur Anzeige. Darüber hinaus sind frei programmierbare und gegebenenfalls Makro-befehlsfähige Funktionstasten vorgesehen. Diese Tasten können über eine freie Programmierung einem Gerät im Fahrzeug zugewiesen werden, welches seinen jeweiligen Betriebsstatus bei Betätigung der entsprechenden Funktionstaste auf dem Display zur Anzeige bringt.

Des Weiteren ist aus der DE 35 14 438 C1 eine zentrale Bedienungseingabe und Informationsausgabe zur Steuerung von mehreren Zusatzgeräten bekannt, die in ein Fahrzeug eingebaut sind. Die Ein- und Ausgabevorrichtung umfasst eine Anzeigeeinheit und Bedientasten, die Elementen dargestellter Menüs eindeutig zugeordnet sind. Die Elemente der Menüs geben Funktionen an, die durch die jeweiligen Bedientasten anregbar sind. Menüs für einzelne Zusatzgeräte sind über ein auf der Anzeige darstellbares Grundmenü anwählbar. Ferner umfasst das System zusätzliche Bedienelemente, mit denen ein direkter Zugriff zu bestimmten Grundfunktionen der zentralen Bedienungseingabe und Informationsausgabe und der Zusatzgeräte jederzeit und unabhängig vom augenblicklich angewählten Menü gegeben ist. Aus der Gattungsbildenden US 2006 197753 A1 ist ein multifunktionales Handgerät bekannt. Der Bildschirm des Handgeräts kann dabei ein berührungsempfindlicher Bildschirm sein. Dabei wird ein Verfahren bereitgestellt, bei dem detektiert wird, ob Berührungen des Bildschirms mit hartem oder leichtem Druck erfolgen. Weiterhin kann die Position der Berührung erfasst werden und somit die Navigation durch das Menü gesteuert werden. Schließlich ist aus der US 2008 0058007 A1 ist ein Verfahren zum Steuern eines mobilen Endgerätes durch Mustererkennung bekannt. Das Verfahren umfasst dabei, Benutzereingaben mittels eines berührungsempfindlichen Bildschirms zu empfangen und festzustellen, ob die Benutzereingabe ein Muster ist, das einer Funktion des mobilen Endgeräts oder der Bedienung des mobilen Endgeräts zugeordnet ist.

Neben den vorstehend beschriebenen abgesetzten Bedienelementen wurde ferner vorgeschlagen, das Display selbst mit einer berührungsempfindlichen Oberfläche auszustatten und auf diese Weise einen so genannten Touchscreen zur Verfügung zu stellen. Bei einem solchen Touchscreen erfolgt die Bedienung dadurch, dass der Nutzer z. B. mit seiner Fingerspitze den Touchscreen berührt. Die Position der Berührung wird erfasst, ausgewertet und einem Bedienschritt zugeordnet. Um den Nutzer bei der Bedienung zu unterstützen, können auf dem Display virtuelle Schalter als graphische Schaltflächen dargestellt werden. Eine Anzeigevorrichtung mit einer berührungsempfindlichen Oberfläche, die in Verbindung mit einem Navigationssystem eingesetzt wird, ist beispielsweise in der DE 10 2005 020 155 A1 beschrieben.

Für die Anzeige von Information in einem Fahrzeug und für die Bedienung der vielfältigen Einrichtungen des Fahrzeugs ergeben sich sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und intuitiv wie möglich durchführbar sein, so dass der Fahrer die Einrichtungen auch während der Fahrt bedienen kann. Wird die Bedienung von einer Anzeige unterstützt oder geführt, sollte die Anzeige so erfolgen, dass der Fahrer für die Bedienung nur sehr kurz die Anzeige betrachten muss, um die Bedienung durchzuführen.

Um die vielfältigen Bedien- und Anzeigemöglichkeiten übersichtlich darzustellen, werden häufig hierarchische Menüstrukturen verwendet. Ein Menü zeigt verschiedene Listeneinträge oder Objekte und gegebenenfalls den Listeneinträgen bzw. Objekten zugeordnete Grafiken, graphische Schaltflächen oder Icons an. Bei der Auswahl eines Listeneintrags bzw. Objekts öffnet sich ein Untermenü mit weiteren Listeneinträgen oder Objekten. Diese Struktur kann über mehrere Hierarchieebenen fortgeführt werden. Außerdem kann einem Listeneintrag oder Objekt anstatt eines Untermenüs ein bestimmter Anzeigeinhalt zugeordnet sein, welcher die dem Listeneintrag bzw. Objekt zugeordnete Information darstellt.

Bei der Verwendung von hierarchischen Menüstrukturen in einem Fahrzeug ergibt sich das Problem, dass die Navigation innerhalb dieser Menüstrukturen zu einer Ablenkung des Fahrers führen kann. Es ist daher wünschenswert, Bedienkonzepte für hierarchische Menüstrukturen zu entwickeln, bei welchen die Navigation innerhalb der Menüstruktur schnell und intuitiv vom Fahrer durchgeführt werden kann.

Es ist die Aufgabe der vorliegenden Erfindung, ein Verfahren und eine Bedienvorrichtung der eingangs genannten Art bereitzustellen, mit denen sich die grafische Benutzerschnittstelle zumindest hinsichtlich grundlegender Funktionen einfach und schnell steuern lässt.

Erfindungsgemäß wird diese Aufgabe durch ein Verfahren mit den Merkmalen des Anspruchs 1, ein Verfahren mit den Merkmalen des Anspruchs 8 sowie eine Bedienvorrichtung mit den Merkmalen des Anspruchs 11 bzw. eine Bedienvorrichtung mit den Merkmalen des Anspruchs 12 gelöst. Vorteilhafte Aus- und Weiterbildungen ergeben sich aus den abhängigen Ansprüchen.

Für das erfindungsgemäße Verfahren ist ein Menü definiert, bei dem mehreren Objekten des Menüs jeweils eine Funktion zugeordnet ist. Zumindest einem Teil der Objekte ist jeweils eine globale Eingabegeste zugeordnet, wobei die Eingabegeste auf einer berührungsempfindlichen Oberfläche einer Eingabevorrichtung ausführbar ist. Ferner sind auf einer Anzeigefläche verschiedene Anzeigeinhalte anzeigbar. Bei dem erfindungsgemäßen Verfahren wird eine auf der berührungsempfindlichen Oberfläche ausgeführte globale Eingabegeste erfasst und unabhängig von dem augenblicklich wiedergegebenen Anzeigeinhalt auf der Anzeigefläche eine Funktion ausgeführt, die dem Objekt zugeordnet ist, welches wiederum der erfassten Eingabegeste zugeordnet ist.

Unter einer *globalen Eingabegeste* wird im Sinne der Erfindung verstanden, dass die Eingabegeste bei allen Menüs gleich interpretiert wird. Unabhängig davon, welcher Anzeigeinhalt aktuell angezeigt wird, wird eine globale Eingabegeste immer für dieselbe Funktion verwendet. Beispielsweise kann die Funktion festlegen, dass immer ein bestimmtes Objekt eines bestimmten Menüs aufgerufen werden soll. Eine globale Eingabegeste unterscheidet sich somit von Eingaben, die in Abhängigkeit von dem aktuellen Anzeigeinhalt einer bestimmten Funktion zugeordnet werden. Wird bei einem Menü beispielsweise eine Schaltfläche angezeigt, wird die Berührung der berührungsempfindlichen Oberfläche im Bereich dieser Schaltfläche einer Funktion zugeordnet, die davon abhängt, welchen Informationsinhalt die Schaltfläche hatte. Unabhängig von solchen lokalen Schaltflächen wird eine globale Eingabegeste immer gleich interpretiert und einer bestimmten Funktion zugeordnet. Die Funktion kann sich jedoch auch auf den aktuellen Anzeigeinhalt beziehen. Beispielsweise kann die Funktion festlegen, dass - unabhängig vom Anzeigeinhalt - immer das dritte Objekt einer Liste oder das Objekt rechts oben ausgewählt werden soll.

Eine globale Eingabegeste kann beispielsweise die gleichzeitige Berührung der berührungsempfindlichen Oberfläche bei verschiedenen Bereichen umfassen. Es kann insbesondere die gleichzeitige Berührung der Oberfläche mit mehreren Fingerspitzen erfasst werden. Eine globale Eingabegeste umfasst insbesondere die gleichzeitige Berührung bei zumindest drei verschiedenen Bereichen der berührungsempfindlichen Oberfläche. In diesem Fall ist die berührungsempfindliche Oberfläche bzw. die Eingabevorrichtung, welche diese Oberfläche umfasst, so ausgebildet, dass die gleichzeitige Berührung bei verschiedenen Bereichen erfasst und ausgewertet werden kann. Des Weiteren kann eine Bewegung eines Objekts oder mehrerer Objekte wie zum Beispiel eines Fingers oder mehrerer Finger, die auf der berührungsempfindlichen Oberfläche ausgeführt wird, erfasst und einer globalen Eingabegeste zugeordnet werden. Die globale Eingabegeste kann beispielsweise einem auf der berührungsempfindlichen Oberfläche ausgeführten Schriftzug entsprechen, welcher einer Zahl zugeordnet ist. Der Nutzer kann beispielsweise eine Zahl mit der Fingerspitze auf die berührungsempfindliche Oberfläche schreiben.

Bei dem erfindungsgemäßen Verfahren wird die Eingabe einer globalen Eingabegeste unabhängig von möglichen anderen Eingabemöglichkeiten, die dem aktuell angezeigten Menü zugeordnet sind, erkannt. Selbst wenn beispielsweise bei der Eingabe der globalen Eingabegeste ein Bereich der berührungsempfindlichen Oberfläche berührt wird, der einer Schaltfläche des aktuell angezeigten Menüs zugeordnet ist, wird diese Eingabe nicht der Betätigung der Schaltfläche zugeordnet, sondern der globalen Eingabegeste. Hierbei wird insbesondere ausgenutzt, dass die berührungsempfindliche Oberfläche gleichzeitig bei mehreren Bereichen berührt wird, so dass eine Unterscheidung zu Eingaben getroffen werden kann, bei denen die berührungsempfindliche Oberfläche nur in einem Bereich gleichzeitig berührt wird.

Erfindungsgemäß ist zumindest einem Teil der Objekte ein Untermenü zugeordnet. Gemäß einer Ausgestaltung des erfindungsgemäßen Verfahrens wird das zu einem Objekt gehörige Untermenü bei dem erfindungsgemäßen Verfahren angezeigt, wenn die zu diesem Objekt gehörige globale Eingabegeste erfasst wurde. Die Funktion, welcher der globalen Eingabegeste zugeordnet ist, ist in diesem Fall die Anzeige eines bestimmten Untermenüs. Bei den Untermenüs handelt es sich insbesondere um die Untermenüs der Objekte eines Hauptmenüs. Es betrifft eine der grundlegenden Funktionen, die von dem Verfahren angesteuert werden können.

Damit eine globale Eingabegeste leichter von anderen Eingaben unterschieden werden kann, ist bei dem erfindungsgemäßen Verfahren vorgesehen, dass vor dem Ausführen der globalen Eingabegeste eine separate Eingabe ausgeführt wird, die indiziert, dass die darauffolgende Eingabe eine globale Eingabegeste ist. Die globale Eingabegeste ist dabei innerhalb eines Zeitintervalls nach der separaten Eingabe auszuführen. Dadurch können Verwechslungen mit anderen Eingaben sicher vermieden werden.

Gemäß einer anderen Ausgestaltung des erfindungsgemäßen Verfahrens wird auf der berührungsempfindlichen Oberfläche ein Bereich zum Ausführen der globalen Eingabegeste definiert. Dabei kann die Lage und/oder Größe des Bereichs in Abhängigkeit von dem aktuellen Anzeigeinhalt festgelegt werden. Auch auf diese Weise kann verhindert werden, dass sich Verwechslungen zwischen globalen Eingabegesten und anderen Eingaben ergeben.

Des Weiteren betrifft die Erfindung ein Verfahren zum Steuern einer grafischen Benutzerschnittstelle, wobei ein Menü definiert ist, bei dem mehreren Objekten des Menüs jeweils eine Funktion zugeordnet ist und zumindest einem Teil der Objekte jeweils eine unterschiedliche Zahl zugeordnet ist und diesem Teil der Objekte jeweils eine globale Eingabegeste zugeordnet ist, wobei die Eingabegeste auf einer berührungsempfindlichen Oberfläche einer Eingabevorrichtung ausführbar ist. Bei dem Verfahren wird eine auf der berührungsempfindlichen Oberfläche ausgeführte globale Eingabegeste erfasst und einer Zahl zugeordnet. Daraufhin wird eine Funktion ausgeführt, die dem Objekt des augenblicklich angezeigten Menüs zugeordnet ist, dem die Zahl zugeordnet ist.

Auch bei dieser Ausgestaltung des erfindungsgemäßen Verfahrens ist die Funktion, welcher der globalen Eingabegeste zugeordnet ist, vom augenblicklich wiedergegebenen Anzeigeinhalt unabhängig. Die Funktion bezieht sich jedoch insofern auf das augenblicklich angezeigte Menü, als dass den Objekten dieses Menüs jeweils eine Zahl zugeordnet ist, welche eine Beziehung zwischen dem Objekt und der globalen Eingabegeste herstellt. Unabhängig vom Anzeigeinhalt kann beispielsweise immer das dritte Objekt eines Menüs ausgewählt werden, bei dem die Objekte als Liste geordnet sind.

Diese Ausgestaltung des erfindungsgemäßen Verfahrens kann insbesondere dann eingesetzt werden, wenn verschiedenen Menüs jeweils nur eine überschaubare Anzahl von Objekten zugeordnet ist. Werden in Verbindung mit den Menüs insbesondere nur fünf Objekte oder weniger als fünf Objekte globalen Eingabegesten zugeordnet, umfasst die Eingabegeste erfindungsgemäß die gleichzeitige Berührung bei verschiedenen Bereichen der berührungsempfindlichen Oberfläche, wobei die Anzahl der abgegrenzten Bereiche der Zahl entspricht, welcher die Eingabegeste zugeordnet wird. Der Nutzer kann in diesem Fall insbesondere die berührungsempfindliche Oberfläche mit seinen Fingerspitzen berühren, wobei er durch die Anzahl der Fingerspitzen, welche die berührungsempfindliche Oberfläche berühren, in jedem Menü festlegen kann, welches Objekt ausgewählt werden soll.

Des Weiteren ist es auch in diesem Fall möglich, dass die globale Eingabegeste einem auf der berührungsempfindlichen Oberfläche ausgeführten Schriftzug entspricht, welcher einer der Eingabegeste zugeordneten Zahl entspricht.

Gemäß einer weiteren Ausgestaltung des erfindungsgemäßen Verfahrens ist zumindest ein weiteres Menü definiert, bei dem mehreren Objekten des weiteren Menüs jeweils eine Funktion zugeordnet ist. Zumindest einem Teil der Objekte des weiteren Menüs ist jeweils eine unterschiedliche Zahl zugeordnet und diesem Teil der Objekte des weiteren Menüs ist jeweils eine globale Eingabegeste zugeordnet. Bei dieser Ausgestaltung des erfindungsgemäßen Verfahrens wird eine Funktion ausgeführt, die dem Objekt des augenblicklich angezeigten Menüs zugeordnet ist, das der Zahl zugeordnet ist. Eine Eingabegeste ist somit einer Zahl zugeordnet, die für eine Vielzahl von Menüs so interpretiert werden kann, dass das der Zahl zugeordnete Objekt des aktuell angezeigten Menüs ausgewählt und die entsprechende Funktion ausgeführt wird.

Die erfindungsgemäße Bedienvorrichtung für eine grafische Benutzerschnittstelle umfasst eine Anzeigevorrichtung mit einer Anzeigefläche und eine Steuervorrichtung, mit welcher die auf der Anzeigefläche wiedergegebenen Anzeigeinhalte steuerbar sind. Mittels der Steuervorrichtung sind Anzeigeinhalte zu einem Menü erzeugbar, bei dem mehreren Objekten des Menüs jeweils eine Funktion zugeordnet ist, wobei zumindest einem Teil der Objekte jeweils eine globale Eingabegeste zugeordnet ist. Die Bedienvorrichtung umfasst ferner eine Eingabevorrichtung, die eine berührungsempfindliche Oberfläche aufweist, mit der die globale Eingabegeste, welche auf der berührungsempfindlichen Oberfläche ausgeführt wurde, detektierbar ist. Dabei ist mit der Steuervorrichtung der erfindungsgemäßen Bedienvorrichtung unabhängig von dem augenblicklich wiedergegebenen Anzeigeinhalt auf der Anzeigefläche eine Funktion ausführbar, die dem Objekt zugeordnet ist, welches wiederum einer globalen Eingabegeste zugeordnet ist, die mittels der Eingabevorrichtung erfasst worden ist.

Gemäß einem anderen Aspekt der Erfindung ist bei der Bedienvorrichtung zumindest einem Teil der Objekte jeweils eine unterschiedliche Zahl zugeordnet und diesem Teil der Objekte jeweils eine globale Eingabegeste zugeordnet. In diesem Fall ist mit der Steuervorrichtung eine Funktion ausführbar, die dem Objekt des augenblicklich angezeigten Menüs zugeordnet ist, welches wiederum der Zahl zugeordnet ist, die einer globalen Eingabegeste zugeordnet ist, die mittels der Eingabevorrichtung erfasst worden ist.

Die Eingabevorrichtung der erfindungsgemäßen Bedienvorrichtung ist erfindungsgemäß so ausgebildet, dass die gleichzeitige Berührung bei verschiedenen Bereichen der berührungsempfindlichen Oberfläche erfassbar ist. Die berührungsempfindliche Oberfläche kann dabei unabhängig von der Anzeigefläche vorgesehen sein, so dass ein so genannter Touchpad zur Verfügung gestellt wird. Ferner kann die berührungsempfindliche Oberfläche auf der Anzeigefläche gebildet sein, so dass ein so genannter Touchscreen zur Verfügung gestellt wird. Bei dem Touchpad bzw. dem Touchscreen handelt es sich um ein so genanntes Multi-Touchpad bzw. einem Multi-Touchscreen, bei denen die gleichzeitige Berührung mit mehreren Fingerspitzen erfassbar und interpretierbar ist.

Das erfindungsgemäße Verfahren wird insbesondere zum Steuern einer graphischen Benutzerschnittstelle eingesetzt, die die Bedienungen von Fahrzeugeinrichtungen unterstützt. Die erfindungsgemäße Bedienvorrichtung ist insbesondere in einem Fahrzeug untergebracht. Die Anzeigefläche ist dabei so angeordnet, dass sie von Fahrzeuginsassen, insbesondere dem Fahrer des Fahrzeugs, betrachtet werden kann. Des Weiteren ist die berührungsempfindliche Oberfläche der Eingabevorrichtung so angeordnet, dass sie von Fahrzeuginsassen, insbesondere dem Fahrer des Fahrzeugs, mit der Fingerspitze berührt werden kann.

Die Erfindung wird nun anhand von Ausführungsbeispielen mit Bezug zu den Zeichnungen erläutert.
- Figur 1: zeigt schematisch den Aufbau eines Ausführungsbeispiels der erfindungsgemäßen Vorrichtung und die Koppelung dieser Vorrichtung mit anderen Einrichtungen des Fahrzeugs,
- die Figuren 2 und 3: veranschaulichen die Eingabe einer globalen Eingabegeste,
- Figur 4: veranschaulicht die Eingabe einer globalen Eingabegeste auf andere Weise,
- Figur 5: zeigt eine Ausgestaltung der Anzeigefläche, die bei Ausführungsbeispielen der Erfindung verwendet wird, und
- die Figuren 6A bis 6C: zeigen Markierungen an Objekten, welche eine zugeordnete globale Eingabegeste visualisieren.

Die im Folgenden beschriebenen Ausführungsbeispiele für Bedienvorrichtungen bzw. Verfahren zum Steuern einer grafischen Benutzerschnittstelle werden insbesondere in einem Fahrzeug eingesetzt. Sie sind jedoch auch bei grafischen Benutzerschnittstellen einsetzbar, die in Verbindung mit anderen Einrichtungen, insbesondere mobilen Geräten, verwendet werden. Bei dem Einsatz im Fahrzeug ergibt sich jedoch der besondere Vorteil, dass das Verfahren bzw. die Bedienvorrichtung einen sehr schnellen Zugriff zu grundlegenden Funktionen des Fahrzeugs bereitstellen. Auf diese Weise kann eine mögliche Ablenkung des Fahrers bei der Bedienung von Einrichtungen des Fahrzeugs auf ein Mindestmaß reduziert werden. Außerdem kann der Nutzer sehr schnell auf die grundlegenden Funktionen des Fahrzeugs zugreifen.

Die Bedienvorrichtung umfasst eine Anzeigevorrichtung 1 mit einer Anzeigefläche 2, die so im Innenraum des Fahrzeugs angeordnet ist, dass sie von zumindest einem Fahrzeuginsassen, insbesondere dem Fahrer, gut sichtbar ist. Mittels der Anzeigefläche 2 wird die grafische Benutzerschnittstelle bereitgestellt, welche mittels des Verfahrens bzw. der Bedienvorrichtung gesteuert werden kann. Die Anzeigefläche 2 kann von einem Display, insbesondere einem Flüssigkristalldisplay, beliebiger Bauart bereitgestellt werden. Die Anzeigevorrichtung 1 ist mit einer Steuervorrichtung 3 gekoppelt.

Die Steuervorrichtung 3 erzeugt Grafikdaten, die mittels der Anzeigevorrichtung 1 angezeigt werden können. Die Steuervorrichtung ist hierfür mit einem Speicher 4 zum Speichern von Daten verbunden. Die Daten sind insbesondere mittels hierarchischer Menüs strukturiert. Jedes Menü umfasst dabei mehrere Objekte, denen jeweils eine Funktion zugeordnet ist. Bei den Objekten kann es sich insbesondere um auswählbare Schaltflächen handeln.

Unter einer *Schaltfläche* wird im Sinne der Erfindung ein Steuerelement einer graphischen Benutzerschnittstelle verstanden. Eine Schaltfläche unterscheidet sich von Elementen und Flächen zur reinen Informationsanzeige, so genannten Anzeigeelementen bzw. Anzeigenflächen, darin, dass sie auswählbar sind. Bei einer Auswahl einer Schaltfläche wird eine ihr zugeordnete Funktion ausgeführt. Die Funktion kann nur zu einer Veränderung der Informationsanzeige führen. Ferner können über die Schaltflächen auch Einrichtungen gesteuert werden, deren Bedienung von der Informationsanzeige unterstützt wird. Die Schaltflächen können somit herkömmliche mechanische Schalter ersetzen. Die Schaltflächen können beliebig auf einer frei programmierbaren Anzeigefläche erzeugt und angezeigt werden. Des Weiteren kann vorgesehen sein, dass eine Schaltfläche markiert werden kann. In diesem Fall wird die zugeordnete Funktion noch nicht ausgeführt. Die markierte Schaltfläche wird jedoch gegenüber anderen Schaltflächen hervorgehoben dargestellt. Die Markierung und/oder Auswahl einer Schaltfläche kann mittels einer Cursorsteuerung oder durch direkte Bedienung einer berührungsempfindlichen Oberfläche 5 der Anzeigefläche erfolgen.

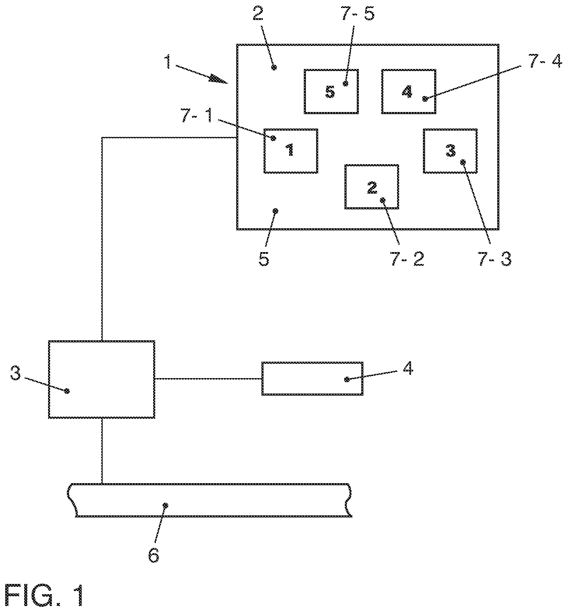

In Figur 1 ist beispielsweise ein Menü gezeigt, welches fünf als Schaltflächen ausgebildete Objekte 7-1 bis 7-5 umfasst (die Objekte 7-1 bis 7-5 werden im Folgenden auch allgemein als Objekt 7 oder Objekte 7 bezeichnet). Bei dem in Figur 1 gezeigten Menü handelt es sich insbesondere um das grundlegende Hauptmenü der graphischen Benutzerschnittstelle des Fahrzeugs . Die Objekte 7 betreffen die grundtegenden Funktionen des Fahrzeugs, welche beispielsweise die Klimaeinstellungen, das Navigationssystem, Kommunikationseinrichtungen und Multimediaeinrichtungen umfassen können.

Wie in Figur 1 gezeigt sind die einzelnen Objekte 7 mit den Zahlen 1 bis 5 gekennzeichnet. Diese Zahlen werden in Verbindung mit den Objekten 7 auf der Anzeigefläche 2 angezeigt. Des Weiteren können die Objekte 7 grafische oder alphanumerische Elemente enthalten, welche die Funktion visualisieren, die dem jeweiligen Objekt 7 zugeordnet ist.

Die Bedienvorrichtung umfasst ferner eine Eingabevorrichtung, die im vorliegenden Ausführungsbeispiel eine berührungsempfindliche Oberfläche 5 aufweist. Bei dem in Figur 1 gezeigten Ausführungsbeispiel ist die berührungsempfindliche Oberfläche 5 auf der Anzeigefläche 2 gebildet. Die Anzeigevorrichtung 1 umfasst somit einen Touchscreen. Auf der berührungsempfindlichen Oberfläche 5 der Anzeigefläche 2 ist insbesondere die gleichzeitige Berührung bei verschiedenen Bereichen detektierbar. Es handelt sich somit um einen so genannten Multi-Touchscreen.

Alternativ kann die berührungsempfindliche Oberfläche auch separat von der Anzeigefläche 2 vorgesehen sein. In diesem Fall umfasst die Eingabevorrichtung somit ein Touchpad, insbesondere ein Multi-Touchpad.

Des Weiteren ist die Steuervorrichtung 3 mit einem Fahrzeugbus 6 gekoppelt, über welchen Daten der vielfältigen Einrichtungen des Fahrzeugs ausgetauscht werden können. Die Bedienung dieser Einrichtungen kann von der Anzeige auf der Anzeigefläche 2 unterstützt werden. Des Weiteren kann die Bedienung dieser Einrichtungen mittels der Eingabevorrichtung, insbesondere der berührungsempfindlichen Oberfläche 5, erfolgen.

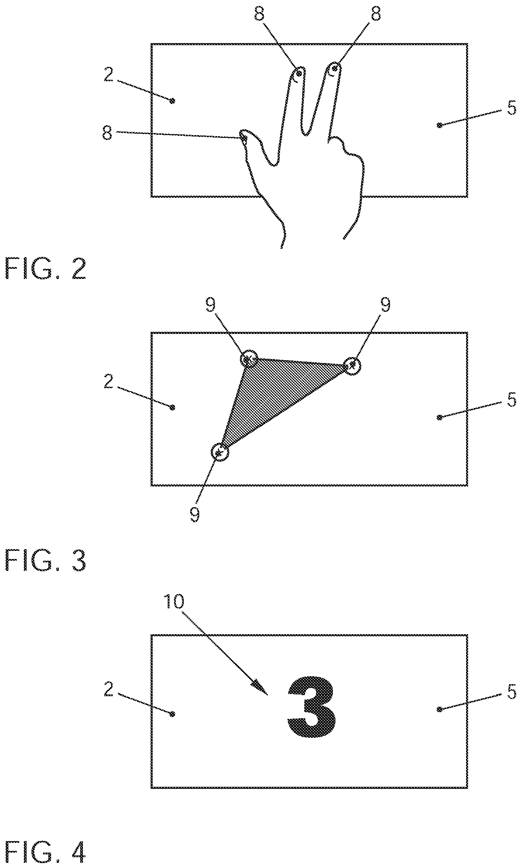

Im Folgenden wird mit Bezug zu den Figuren 2 bis 4 ein erstes Ausführungsbeispiel des erfindungsgemäßen Verfahrens erläutert, welches mittels der vorstehend beschriebenen Bedienvorrichtung durchführbar ist:
Die in dem Speicher 4 gespeicherten Daten sind als hierarchische Menüstruktur abgelegt. Die zu dieser hierarchischen Menüstruktur gehörenden Menüs können mittels der Steuervorrichtung 3 auf der Anzeigefläche 2 angezeigt werden. In der höchsten Hierarchieebene wird ein Hauptmenü angezeigt, welches die Objekte 7-1 bis 7-5 enthält. Jedem der Objekte 7 ist eine bestimmte Funktion zugeordnet, im vorliegenden Fall der Aufruf eines Untermenüs. Wählt der Nutzer beispielsweise bei der in Figur 1 dargestellten Wiedergabe des Hauptmenüs das Objekt 7-1 aus, indem er beispielsweise die berührungsempfindliche Oberfläche 5 in dem Bereich des Objekts 7-1 berührt, wird ein Untermenü angezeigt, welches dem Objekt 7-1 zugeordnet ist. Entsprechend können die Untermenüs zu den anderen Objekten 7-2 bis 7-5 ausgewählt werden.

Des Weiteren sind den Objekten 7 so genannte globale Eingabegesten zugeordnet. Durch die Eingabe einer globalen Eingabegeste auf der berührungsempfindlichen Oberfläche 5 kann eine dem entsprechenden Objekt 7 zugeordnete Funktion unabhängig von dem augenblicklich wiedergegebenen Anzeigeinhalt auf der Anzeigefläche 2, d.h. auch unabhängig von dem aktuell angezeigten Menü, ausgeführt werden.

In dem gezeigten Ausführungsbeispiel ist jedem der Objekte 7 eine der Zahlen 1 bis 5 zugeordnet. Dem Objekt 7-1, dem die Zahl 1 zugeordnet ist, ist in diesem Fall als globale Eingabegeste die Berührung der berührungsempfindlichen Oberfläche 5 in einem abgegrenzten Bereich, zum Beispiel mit nur einer Fingerspitze, zugeordnet. Dem Objekt 7-2, dem die Zahl 2 zugeordnet ist, ist als globale Eingabegeste das gleichzeitige Berühren der berührungsempfindlichen Oberfläche 5 bei zwei abgegrenzten Bereichen, zum Beispiel mit zwei Fingerspitzen, zugeordnet. Entsprechend ist den Objekten 7-3, 7-4 und 7-5, denen die Zahlen 3, 4 und 5 zugeordnet sind, als globale Eingabegesten die gleichzeitige Berührung der berührungsempfindlichen Oberfläche 5 bei drei, vier bzw. fünf abgegrenzten Bereichen, zum Beispiel mit drei, vier bzw. fünf Fingerspitzen, zugeordnet.

Ausgehend von der in Figur 1 wiedergegebenen Darstellung des Hauptmenüs mit den Objekten 7 kann der Nutzer zunächst auf beliebige Weise durch Auswahl von Schaltflächen innerhalb der hierarchischen Menüstruktur auf an sich bekannte Weise navigieren. Unabhängig davon, bei welchem Menü sich der Nutzer innerhalb der hierarchischen Menüstruktur befindet, kann der Nutzer jederzeit durch Eingabe einer globalen Eingabegeste zu der Auswahl eines der Objekte 7 des Hauptmenüs gelangen, so dass durch die Eingabe der globalen Eingabegeste direkt das entsprechende Untermenü zu dem Objekt 7 aufgerufen wird. Die globale Eingabegeste stellt somit eine Schnellzugriffsfunktion (shortcut) bereit.

In Figur 2 ist beispielsweise gezeigt, dass der Nutzer bei einer beliebigen Anzeige innerhalb der hierarchischen Menüstruktur die berührungsempfindliche Oberfläche 5 gleichzeitig bei drei Positionen mit den Fingerspitzen 8 berührt. Wie in Figur 3 gezeigt, wird von der Steuervorrichtung 3 erfasst, bei welchen Positionen 9 die berührungsempfindliche Oberfläche 5 gleichzeitig berührt worden ist Das gleichzeitige Berühren bei drei abgegrenzten Bereichen kann von der Steuervorrichtung 3 unmittelbar als globale Eingabegeste interpretiert werden, die dem Objekt 7-3 zugeordnet ist. Ferner kann die Steuervorrichtung zunächst die relativen Lagen der Positionen 9 untersuchen und bestimmen, ob die drei Positionen 9 zu einer globalen Eingabegeste, bei welcher die berührungsempfindliche Oberfläche 5 gleichzeitig von drei Fingerspitzen 8 berührt worden ist, gehören kann. Nachdem die globale Eingabegeste erfasst worden ist, wird unabhängig von dem augenblicklich wiedergegebenen Anzeigeinhalt auf der Anzeigefläche 2 die Funktion ausgeführt, die dem Objekt 7-3 zugeordnet ist, da dieses Objekt zu der erfassten Eingabegeste gehört. Es wird im vorliegenden Fall somit das Untermenü aufgerufen und angezeigt, welches dem Objekt 7-3 zugeordnet ist.

Des Weiteren kann den Objekten 7 jeweils eine weitere globale Eingabegeste zugeordnet sein, die dem Nutzer eine weitere Möglichkeit bietet, direkt, d.h. unabhängig von dem augenblicklich wiedergegebenen Anzeigeinhalt auf der Anzeigefläche 2, die Funktion aufzurufen, die dem jeweiligen Objekt 7 zugeordnet ist. Die globale Eingabegeste ist in diesem Fall ein auf der berührungsempfindlichen Oberfläche 5 ausgeführter Schriftzug, welcher einer Zahl entspricht, die dem Objekt 7 zugeordnet ist. In Figur 4 ist beispielsweise gezeigt, dass der Nutzer mit seiner Fingerspitze 8 den Schriftzug 10 für die Zahl drei geschrieben hat. Dieser Schriftzug 10 wird als globale Eingabegeste interpretiert, welche dem Objekt 7-3 zugeordnet ist. Entsprechend kann der Nutzer auch eine andere der Zahlen eins bis fünf als Schriftzug 10 auf der berührungsempfindlichen Oberfläche 5 ausführen, um eine Funktion aufzurufen, die einem der Objekte 7 zugeordnet ist.

Damit globale Eingabegesten leichter von anderen Eingaben unterschieden werden können, die in Verbindung mit Menüs ausgeführt werden, kann vorgesehen sein, dass bei einer globalen Eingabegeste die berührungsempfindliche Oberfläche 5 immer bei mindestens drei abgegrenzten Bereichen gleichzeitig berührt wird. Des Weiteren wird vor dem Ausführen der globalen Eingabegeste eine separate Eingabe ausgeführt, die indiziert, dass die darauf folgende Eingabe eine globale Eingabegeste ist. Die separate Eingabe wird dabei auf einer gesonderten Schaltfläche, die entsprechend gekennzeichnet ist, ausgeführt. Die globale Eingabegeste ist dann innerhalb eines Zeitintervalls nach der separaten Eingabe auszuführen.

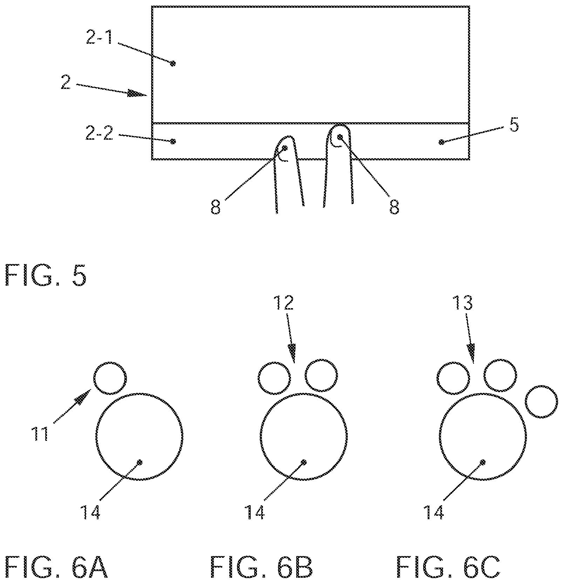

Des Weiteren kann, wie in Figur 5 gezeigt, die Anzeigefläche 2 in zwei Bereiche 2-1 und 2-2 unterteilt sein: Der Bereich 2-1 dient der herkömmlichen Anzeige von Informationen und von Menüs. Der Anzeigebereich 2-2 ist für die Eingabe globaler Eingabegesten reserviert. Dieser Anzeigebereich 2-2 ist mit der berührungsempfindlichen Oberfläche 5 versehen. In diesem Bereich 2-2 kann der Nutzer beispielsweise mittels seiner Fingerspitzen 8 die globale Eingabegeste ausführen. Die Lage und/oder Größe dieses Bereichs 2-2 muss nicht immer identisch festgelegt sein. Die Lage und/oder Größe kann auch in Abhängigkeit von dem aktuellen Anzeigeinhalt, der auf der Anzeigefläche 2 wiedergegeben wird, festgelegt werden.

Im Folgenden wird ein zweites Ausführungsbeispiel des erfindungsgemäßen Verfahrens beschrieben, welches auch von der vorstehend mit Bezug zur Figur 1 beschriebenen Bedienvorrichtung ausgeführt werden kann:
Wie bei dem ersten Ausführungsbeispiel sind eine Vielzahl von Menüs in einer hierarchischen Menüstruktur im Speicher 4 gespeichert. Eine Vielzahl von Menüs umfasst dabei Listen mit mehreren Objekten 7 (Listeneinträgen). Die Objekte 7 verschiedener Menüs können sich jedoch unterscheiden. Bei Multimediaanwendungen kann eine Liste beispielsweise verschiedene Musikstücke oder Stationsnummern des Radios umfassen. Erfolgt die globale Eingabegeste mittels der gleichzeitigen Berührung der berührungsempfindlichen Oberfläche 5 durch die Fingerspitzen 8 der Hand eines Nutzers, ist die Anzahl der Objekte einer Liste auf fünf oder weniger begrenzt.

Wie im ersten Ausführungsbeispiel sind die Objekte 7 jeweils mit Zahlen gekennzeichnet. Auch in diesem Fall können des Weiteren grafische Symbole oder weitere alphanumerische Informationen die Funktion des entsprechenden Objekts 7 visualisieren.

Bei dem zweiten Ausführungsbeispiel ist eine globale Eingabegeste jeweils einer Zahl zugeordnet, die wiederum einem bestimmten Objekt 7 eines Menüs zugeordnet ist. Wird eine globale Eingabegeste ausgeführt, wird jedoch in diesem Fall nicht wie beim zuerst beschriebenen Ausführungsbeispiel die Funktion eines bestimmten Objekts 7 des Hauptmenüs aufgerufen, sondern die Funktion ausgeführt, die dem Objekt 7 des augenblicklich angezeigten Menüs zugeordnet ist, dem die Zahl zugeordnet ist, welche zu der globalen Eingabegeste gehört. Dabei ist die gleichzeitige Berührung der berührungsempfindlichen Oberfläche 5 bei drei abgegrenzten Bereichen der Zahl 3 zugeordnet ist, die gleichzeitige Berührung bei vier abgegrenzten Bereichen der Zahl 4 zugeordnet und entsprechend die gleichzeitige Berührung bei fünf abgegrenzten Bereichen der Zahl 5 zugeordnet. Bei jedem Menü, das eine Liste enthält, kann somit die Berührung der berührungsempfindlichen Oberfläche 5 mit drei Fingerspitzen 8 zum Aufruf des dritten Objekts 7 führen. Gleichermaßen kann das gleichzeitige Berühren mit vier Fingerspitzen 8 zum Aufruf des vierten Objekts führen. Entsprechend kann die jeweilige Zahl, wie es vorstehend mit Bezug zu Figur 4 erläutert wurde, auch mittels eines Schriftzuges 10 eingegeben werden.

Des Weiteren kann für die Eingabe einer globalen Eingabegeste ein separater Bereich 2-2 vorgesehen sein, wie es mit Bezug zu Figur 5 erläutert wurde. Erfindungsgemäß wird eine separate Eingabe vor der eigentlichen Eingabe der globalen Eingabegeste ausgeführt, um die darauf folgende Eingabe innerhalb eines Zeitintervalls als globale Eingabegeste zu identifizieren.

Objekte 7, die mittels globaler Eingabegesten auswählbar sind, können entsprechend markiert werden. In den Figuren 6A bis 6C sind Objekte 14 dargestellt, die mit einer Markierung 11, einer Markierung 12 bzw. einer Markierung 13 versehen sind. Die Markierung 11 zeigt an, dass dem Objekt 14 als globale Eingabegeste die Zahl 1 bzw. die Berührung der berührungsempfindlichen Oberfläche 5 mit einem Finger zugeordnet ist. Die Markierung 12 zeigt an, dass dem Objekt 14 die Zahl 2 zugeordnet ist bzw. die gleichzeitige Berührung der berührungsempfindlichen Oberfläche 5 mit zwei Fingerspitzen 8. Die Markierung 13 zeigt an, dass dem Objekt 14 die Zahl 3 zugeordnet ist bzw. die gleichzeitige Berührung der berührungsempfindlichen Oberfläche 5 mit drei Fingerspitzen 8.

### BEZUGSZEICHENLISTE

- 1: Anzeigevorrichtung
- 2: Anzeigefläche
- 3: Steuervorrichtung
- 4: Speicher
- 5: berührungsempfindliche Oberfläche
- 6: Fahrzeugbus
- 7: Objekte
- 8: Fingerspitzen
- 9: Positionen auf der berührungsempfindlichen Oberfläche 5
- 10: Schriftzug
- 11: Markierung
- 12: Markierung
- 13: Markierung
- 14: Objekt

## Patentansprüche

1. Verfahren zum Steuern einer grafischen Benutzerschnittstelle, bei dem
- ein Menü definiert ist, bei dem mehreren Objekten (7) des Menüs jeweils eine Funktion und zumindest einem Teil der Objekte (7) ein Untermenü zugeordnet ist,
- auf einer Anzeigefläche (2) verschiedene Anzeigeinhalte anzeigbar sind,
- zumindest einem Teil der Objekte (7) jeweils eine globale Eingabegeste zugeordnet ist, wobei die globale Eingabegeste eine Eingabegeste ist, die bei allen Menüs gleich interpretiert wird, die unabhängig davon, welcher Anzeigeinhalt aktuell angezeigt wird, immer für dieselbe Funktion verwendet wird und die auf einer berührungsempfindlichen Oberfläche (5) einer Eingabevorrichtung ausführbar ist,
- eine auf der berührungsempfindlichen Oberfläche (5) ausgeführte globale Eingabegeste erfasst wird, und
- unabhängig von dem augenblicklich wiedergegebenen Anzeigeinhalt auf der Anzeigefläche (2) eine Funktion ausgeführt wird, die dem Objekt (7) zugeordnet ist, welches der erfassten Eingabegeste zugeordnet ist,
**dadurch gekennzeichnet,**
- **dass** vor dem Ausführen der globalen Eingabegeste eine separate Eingabe ausgeführt wird, die indiziert, dass die darauf folgende Eingabe eine globale Eingabegeste ist, wobei die globale Eingabegeste innerhalb eines Zeitintervalls nach der separaten Eingabe auszuführen ist.

2. Verfahren nach Anspruch 1,
**dadurch gekennzeichnet,**
**dass** die globale Eingabegeste die gleichzeitige Berührung bei verschiedenen Bereichen der berührungsempfindlichen Oberfläche (5) umfasst.

3. Verfahren nach Anspruch 2,
**dadurch gekennzeichnet,**
**dass** die globale Eingabegeste die gleichzeitige Berührung bei zumindest drei verschiedenen Bereichen der berührungsempfindlichen Oberfläche (5) umfasst.

4. Verfahren nach Anspruch 1,
**dadurch gekennzeichnet,**
**dass** die globale Eingabegeste einem auf der berührungsempfindlichen Oberfläche (5) ausgeführten Schriftzug (10) entspricht, welcher einer Zahl zugeordnet wird.

5. Verfahren nach einem der vorhergehenden Ansprüche,
**dadurch gekennzeichnet,**
**dass** das zu einem Objekt (7) gehörige Untermenü angezeigt wird, wenn die zu diesem Objekt (7) gehörige Eingabegeste erfasst wurde.

6. Verfahren nach einem der Ansprüche 1 bis 5,
**dadurch gekennzeichnet,**
**dass** auf der berührungsempfindlichen Oberfläche (5) ein Bereich zum Ausführen der globalen Eingabegeste definiert wird.

7. Verfahren nach Anspruch 6,
**dadurch gekennzeichnet,**
**dass** die Lage und/oder Größe des Bereichs in Abhängigkeit von dem aktuellen Anzeigeinhalt festgelegt wird.

8. Verfahren zum Steuern einer grafischen Benutzerschnittstelle, wobei
- ein Menü definiert ist, bei dem mehreren Objekten (7) des Menüs jeweils eine Funktion und zumindest einem Teil der Objekte (7) ein Untermenü zugeordnet ist, und
- zumindest einem Teil der Objekte (7) jeweils eine unterschiedliche Zahl zugeordnet ist und diesem Teil der Objekte (7) jeweils eine globale Eingabegeste zugeordnet ist, wobei die globale Eingabegeste eine Eingabegeste ist, die bei allen Menüs gleich interpretiert wird, die unabhängig von einem aktuell angezeigten Anzeigeinhalt immer für dieselbe Funktion verwendet wird und die auf einer berührungsempfindlichen Oberfläche (5) einer Eingabevorrichtung ausführbar ist, **dadurch gekennzeichnet,**
- **dass** eine auf der berührungsempfindlichen Oberfläche (5) ausgeführte globale Eingabegeste erfasst wird und einer Zahl zugeordnet wird, dass
- eine Funktion ausgeführt wird, die dem Objekt des augenblicklich angezeigten Menüs zugeordnet ist, dem die Zahl zugeordnet ist, und dass
- die Eingabegeste die gleichzeitige Berührung bei verschiedenen Bereichen der berührungsempfindlichen Oberfläche (5) umfasst und die Anzahl der Bereiche der Zahl entspricht, welcher der Eingabegeste zugeordnet ist.

9. Verfahren nach Anspruch 8,
**dadurch gekennzeichnet,**
**dass** die globale Eingabegeste einem auf der berührungsempfindlichen Oberfläche (5) ausgeführten Schriftzug (10) entspricht, welcher einer der Eingabegeste zugeordneten Zahl entspricht.

10. Verfahren nach Anspruch 8 oder 9,
**dadurch gekennzeichnet,**
- **dass** zumindest ein weiteres Menü definiert ist, bei dem mehreren Objekten des weiteren Menüs jeweils eine Funktion zugeordnet ist,
- **dass** zumindest einem Teil der Objekte des weiteren Menüs jeweils eine unterschiedliche Zahl zugeordnet ist und diesem Teil der Objekte des weiteren Menüs jeweils eine globale Eingabegeste zugeordnet ist und
- **dass** eine Funktion ausgeführt wird, die dem Objekt des augenblicklich angezeigten Menüs zugeordnet ist, das der Zahl zugeordnet ist.

11. Bedienvorrichtung für eine grafische Benutzerschnittstelle mit
- einer Anzeigevorrichtung (1) mit einer Anzeigefläche (2),
- einer Steuervorrichtung (3), mit welcher die auf der Anzeigefläche (2) wiedergegebenen Anzeigeinhalte steuerbar sind, wobei mittels der Steuervorrichtung (3) Anzeigeinhalte zu einem Menü erzeugbar sind, bei dem mehreren Objekten (7) des Menüs jeweils eine Funktion und zumindest einem Teil der Objekte (7) ein Untermenü zugeordnet ist, wobei zumindest einem Teil der Objekte (7) jeweils eine globale Eingabegeste zugeordnet ist, die eine Eingabegeste ist, die bei allen Menüs gleich interpretiert wird und die unabhängig davon, welcher Anzeigeinhalt aktuell angezeigt wird immer für dieselbe Funktion verwendet wird und
- einer Eingabevorrichtung, die eine berührungsempfindliche Oberfläche (5) umfasst, mit der die globale Eingabegeste, welche auf der berührungsempfindlichen Oberfläche (5) ausgeführt wurde, detektierbar ist,
- wobei mit der Steuervorrichtung (3) unabhängig von dem augenblicklich wiedergegebenen Anzeigeinhalt auf der Anzeigefläche (2) eine Funktion ausführbar ist, die dem Objekt (7) zugeordnet ist, welches einer globalen Eingabegeste zugeordnet ist, die mittels der Eingabevorrichtung erfasst worden ist, **dadurch gekennzeichnet,**
- **dass** die Eingabevorrichtung eine gesonderte Schaltfläche umfasst, mit der vor dem Ausführen der globalen Eingabegeste eine separate Eingabe ausführbar ist, die indiziert, dass die darauf folgende Eingabe eine globale Eingabegeste ist, wobei die globale Eingabegeste innerhalb eines Zeitintervalls nach der separaten Eingabe auszuführen ist.

12. Bedienvorrichtung für eine grafische Benutzerschnittstelle mit
- einer Anzeigevorrichtung (1) mit einer Anzeigefläche (2),
- einer Steuervorrichtung (3), mit welcher die auf der Anzeigefläche 2 wiedergegebenen Anzeigeinhalte steuerbar sind, wobei mittels der Steuervorrichtung (3) Anzeigeinhalte zu einem Menü erzeugbar sind, bei dem mehreren Objekten (7) des Menüs jeweils eine Funktion und zumindest einem Teil der Objekte (7) ein Untermenü zugeordnet ist, wobei zumindest einem Teil der Objekte (7) jeweils eine unterschiedliche Zahl zugeordnet ist und diesem Teil der Objekte (7) jeweils eine globale Eingabegeste zugeordnet ist, die eine Eingabegeste ist, die bei allen Menüs gleich interpretiert wird und die unabhängig davon, welcher Anzeigeinhalt aktuell angezeigt wird immer für dieselbe Funktion verwendet wird, und
- einer Eingabevorrichtung, die eine berührungsempfindliche Oberfläche (5) umfasst, mit der die globale Eingabegeste, welche auf der berührungsempfindlichen Oberfläche (5) ausgeführt wurde, detektierbar ist und mit der die gleichzeitige Berührung bei verschiedenen Bereichen der berührungsempfindlichen Oberfläche (5) erfassbar ist,
- wobei mit der Steuervorrichtung (3) eine Funktion ausführbar ist, die dem Objekt (7) des augenblicklich wiedergegebenen Menüs zugeordnet ist, welches der Zahl zugeordnet ist, die einer globalen Eingabegeste zugeordnet ist, die mittels der Eingabevorrichtung erfasst worden ist und mit der Steuervorrichtung die Anzahl der Bereiche, die mittels der Eingabevorrichtung erfasst worden sind, der Zahl zugeordnet wird, welche der Eingabegeste zugeordnet ist.

## Claims

1. Method for controlling a graphical user interface, in which
- a menu is defined in which a function is associated with each of a plurality of objects (7) in the menu and a submenu is associated with at least some of the objects (7),
- various display contents can be displayed on a display area (2),
- a global input gesture is in each case associated with at least some of the objects (7), wherein the global input gesture is an input gesture that is interpreted in the same way for all the menus, that is always used for the same function independently of what display content is currently displayed and that can be carried out on a touch-sensitive surface (5) of an input apparatus,
- a global input gesture which is carried out on the touch-sensitive surface (5) is detected, and
- a function which is associated with the object (7) which is associated with the detected input gesture is carried out independently of the display content being shown on the display area (2) at that time, **characterized**
- **in that** before carrying out the global input gesture, a separate input is carried out which indicates that the next input will be a global input gesture, wherein the global input gesture must be carried out within a time interval after the separate input.

2. Method according to Claim 1,
**characterized**
**in that** the global input gesture comprises simultaneous touching of different areas of the touch-sensitive surface (5).

3. Method according to Claim 2,
**characterized**
**in that** the global input gesture comprises the simultaneous touching of at least three different areas of the touch-sensitive surface (5).

4. Method according to Claim 1,
**characterized**
**in that** the global input gesture corresponds to a script (10) which is written on the touch-sensitive surface (5) and is associated with a number.

5. Method according to one of the preceding claims, **characterized**
**in that** the submenu associated with an object (7) is displayed when the input gesture associated with this object (7) has been detected.

6. Method according to one of Claims 1 to 5, **characterized**
**in that** an area for carrying out the global input gesture is defined on the touch-sensitive surface (5).

7. Method according to Claim 6,
**characterized**
**in that** the position and/or the size of the area is defined as a function of the display content at that time.

8. Method for controlling a graphical user interface, wherein
- a menu is defined in which a function is associated with each of a plurality of objects (7) in the menu and a submenu is associated with at least some of the objects (7), and
- a different number is in each case associated with at least some of the objects (7), and a global input gesture is in each case associated with those of the objects (7), wherein the global input gesture is an input gesture that is interpreted in the same way for all the menus, that is always used for the same function independently of a currently displayed display content and that can be carried out on a touch-sensitive surface (5) of an input apparatus, **characterized**
- **in that** a global input gesture which is carried out on the touch-sensitive surface (5) is detected and is associated with a number, in that
- a function is carried out which is associated with that object in the menu being displayed at that time with which the number is associated, and in that
- the input gesture comprises the simultaneous touching of different areas of the touch-sensitive surface (5), and the number of areas corresponds to the number which is associated with the input gesture.

9. Method according to Claim 8,
**characterized**
**in that** the global input gesture corresponds to a script (10) which is written on the touch-sensitive surface (5) and corresponds to a number associated with the input gesture.

10. Method according to Claim 8 or 9,
**characterized**
- **in that** at least one further menu is defined, in which a function is associated with each of a plurality of objects in the further menu,
- **in that** a different number is in each case associated with at least some of the objects in the further menu, and a global input gesture is in each case associated with these objects in the further menu, and
- **in that** a function is carried out which is associated with that object in the menu being displayed at that time which is associated with the number.

11. Control apparatus for a graphical user interface having
- a display apparatus (1) with a display area (2),
- a control device (3), by means of which the display contents shown on the display area (2) can be controlled, wherein display contents relating to a menu can be produced by means of the control device (3), in which menu a function is associated with each of a plurality of objects (7) in the menu and a submenu is associated with at least some of the objects (7), wherein a global input gesture is in each case associated with at least some of the objects (7), which global input gesture is an input gesture that is interpreted in the same way for all the menus and that is always used for the same function independently of what display content is currently displayed, and
- an input apparatus, which comprises a touch-sensitive surface (5) by means of which the global input gesture which has been carried out on the touch-sensitive surface (5) can be detected,
- wherein a function can be carried out by means of the control device (3), independently of the display content on the display area (2) shown at that time, which function is associated with the object (7) which is associated with a global input gesture which has been detected by means of the input apparatus, **characterized**
- **in that** the input apparatus comprises a separate button that can be used to carry out a separate input before the global input gesture is carried out, which separate input indicates that the next input will be a global input gesture, wherein the global input gesture must be carried out within a time interval after the separate input.

12. Control apparatus for a graphical user interface having
- a display apparatus (1) with a display area (2),
- a control device (3), by means of which the display contents shown on the display area (2) can be controlled, wherein display contents relating to a menu can be produced by means of the control device (3), in which menu a function is in each case associated with a plurality of objects (7) in the menu and a submenu is associated with at least some of the objects (7), wherein a different number is in each case associated with at least some of the objects (7), and a global input gesture is in each case associated with those of the objects (7), which global input gesture is an input gesture that is interpreted in the same way for all the menus and that is always used for the same function independently of what display content is currently displayed, and
- an input apparatus, which comprises a touch-sensitive surface (5) by means of which the global input gesture which has been carried out on the touch-sensitive surface (5) can be detected and by means of which the simultaneous touching of different areas of the touch-sensitive surface (5) can be detected,
- wherein a function can be carried out by means of the control device (3), which is associated with the object (7) in the menu shown at that time, which object (7) is associated with the number which is associated with a global input gesture which has been detected by means of the input apparatus, and the control device is used to associate the number of regions which have been detected by means of the input apparatus with the number which is associated with the input gesture.

## Revendications

1. Procédé pour commander une interface utilisateur graphique, pour lequel
- un menu est défini, pour lequel un sous-menu est attribué à plusieurs objets (7) du menu respectivement une fonction et au moins à une partie des objets (7),
- différents contenus d'affichage peuvent être affichés sur une surface d'affichage (2),
- un geste d'introduction global est respectivement attribué à au moins une partie des objets (7), le geste d'introduction global étant un geste d'introduction, qui est interprété de façon identique pour tous les menus indépendamment du contenu d'affichage actuellement affiché, lequel est toujours utilisé pour la même fonction et qui peut être exécuté sur une surface (5) tactile d'un dispositif d'introduction,
- un geste d'introduction global exécuté sur la surface tactile (5) est saisi, et
- une fonction est exécutée indépendamment du contenu d'affichage sur la surface d'affichage (2) restitué instantanément, qui est attribuée à l'objet (7), lequel est attribué au geste d'introduction saisi, **caractérisé en ce**
- **qu'**avant l'exécution du geste d'introduction global, une introduction séparée est effectuée, qui indique que l'introduction suivant celui-ci est un geste d'introduction global, le geste d'introduction global étant exécuté à l'intérieur d'un intervalle de temps après l'introduction séparée.

2. Procédé selon la revendication 1,
**caractérisé en ce**
**que** le geste d'introduction global comprend le contact simultané pour différentes zones de la surface tactile (5).

3. Procédé selon la revendication 2,
**caractérisé en ce**
**que** le geste d'introduction global comprend le contact simultané pour au moins trois zones différentes de la surface tactile (5).

4. Procédé selon la revendication 1,
**caractérisé en ce**
**que** le geste d'introduction global correspond à une écriture (10) exécutée sur la surface tactile (5), laquelle est attribuée à un nombre.

5. Procédé selon l'une quelconque des revendications précédentes,
**caractérisé en ce**
**qu'**un sous-menu appartenant à un objet (7) est affiché, si le geste d'introduction appartenant à cet objet (7) a été saisi.

6. Procédé selon l'une quelconque des revendications 1 à 5,
**caractérisé en ce**
**qu'**une zone est définie sur la surface tactile (5) pour exécuter le geste d'introduction global.

7. Procédé selon la revendication 6,
**caractérisé en ce**
**que** la position et/ou la taille de la zone est fixée en fonction du contenu d'affichage actuel.

8. Procédé pour commander une interface utilisateur graphique,
- un menu étant défini, pour lequel une fonction est respectivement attribuée à plusieurs objets (7) du menu et un sous-menu est attribué au moins à une partie des objets (7), et
- un nombre different est respectivement attribué à au moins une partie des objets (7) et un geste d'introduction global est respectivement attribué à cette partie des objets (7), le geste d'introduction global étant un geste d'introduction, qui est interprété de façon identique pour tous les menus, qui est toujours utilisé pour la même fonction indépendamment d'un contenu d'affichage actuellement affiché et qui peut être exécuté sur une surface tactile (5) d'un dispositif d'introduction,
**caractérisé en ce**
- **qu'**un geste d'introduction global exécuté sur la surface tactile (5) est saisi et attribué à un nombre, en ce
- **qu'**une function est effectuée, qui est attribuée à l'objet du menu affiché instantanément, est attribuée à un nombre et en ce que
- le geste d'introduction global comprend le contact simultané pour différentes zones de la surface tactile (5) et le nombre de zones correspond au nombre, lequel est attribué au geste d'introduction.

9. Procédé selon la revendication 8,
**caractérisé en ce**
**que** le geste d'introduction global correspond à une écriture (10) effectuée sur la surface tactile (5), laquelle correspond à un nombre attribué au geste d'introduction.

10. Procédé selon la revendication 8 ou 9, **caractérisé en ce**
- **qu'**au moins un autre menu est défini, pour lequel une fonction est respectivement attribuée à plusieurs objets de l'autre menu,
- **qu'**un nombre différent est respectivement attribué à au moins une partie des objets de l'autre menu et un geste d'introduction global est respectivement attribué à cette partie des objets de l'autre menu, et
- **qu'**une fonction est exécutée, qui est attribué à l'objet du menu affiché instantanément qui est attribué au nombre.

11. Dispositif d'utilisation pour une interface utilisateur graphique avec
- un dispositif d'affichage (1) avec une surface d'affichage (2),
- un dispositif de commande (3) avec lequel les contenus d'affichage restitués sur la surface d'affichage (2) peuvent être pilotés, les contenus d'affichage pouvant être générés en un menu au moyen du dispositif de commande (3), pour lequel une fonction est respectivement attribuée à plusieurs objets (7) du menu et un sous-menu est respectivement attribué à au moins une partie des objets (7), un geste d'introduction global étant respectivement attribué à au moins une partie des objets (7), qui est un geste d'introduction, qui est interprété de façon identique pour tous les menus et qui est toujours utilise pour la même fonction indépendamment du contenu d'affichage actuellement affiché, et
- un dispositif d'introduction, qui comprend une surface tactile (5) avec laquelle le geste d'introduction global, exécuté sur la surface tactile (5), peut être détecté,
- une fonction pouvant être effectuée avec le dispositif de commande (3) indépendamment du contenu d'affichage sur la surface d'affichage (2) restitué instantanément qui est attribué à l'objet (7), lequel est attribué à un geste d'introduction global, qui a été saisi au moyen du geste d'introduction,
**caractérisé en ce que**
- le dispositif d'introduction comprend une surface de connexion séparée avec laquelle une introduction séparée peut être exécutée avant l'exécution du geste d'introduction global, qui indique que l'introduction suivant celui-ci est un geste d'introduction global, le geste d'introduction global devant être exécuté à l'intérieur d'un intervalle de temps après l'introduction séparée.

12. Dispositif d'utilisation pour une interface utilisateur graphique avec
- un dispositif d'affichage (1) avec une surface d'affichage (2),
- un dispositif de commande (3) avec lequel les contenus d'affichage restitués sur la surface d'affichage (2) peuvent être pilotés, les contenus d'affichage pouvant être générés en un menu au moyen du dispositif de commande (3), pour lequel une fonction est respectivement attribuée à plusieurs objets (7) du menu et un sous-menu est respectivement attribué à au moins une partie des objets (7), un nombre différent étant respectivement attribué à au moins une partie des objets (7) et un geste d'introduction global étant respectivement attribué à au moins une partie des objets (7), qui est un geste d'introduction, qui est interprété de façon identique pour tous les menus et qui est toujours utilisé pour la même fonction ibndépendamment du contenu d'affichage actuellement affiché, et
- un dispositif d'introduction, qui comprend une surface tactile (5) avec laquelle le geste d'introduction global, exécuté sur la surface tactile (5), peut être détecté et avec lequel le contact simultané pour différentes zones de la surface tactile (5) peut être saisi,
- une fonction pouvant être effectuée avec le dispositif de commande (3), qui est attribuée à l'objet (7) du menu instantanément restitué, lequel est attribué au nombre qui est attribué à un geste d'introduction global, qui a été saisi au moyen du dispositif d'introduction et le nombre des zones qui ont été saisies au moyen du dispositif d'introduction, est attribué au nombre, lequel est attribué au geste d'introduction.
